(19)

Europäisches
Patentamt
European
Patent Office
Office européen
des brevets

(11) **EP 2 184 924 A2**

(12) **EUROPEAN PATENT APPLICATION**

(43) Date of publication:
**12.05.2010 Bulletin 2010/19**

(51) Int Cl.:
*H04N 7/26* (2006.01)  *H04N 7/36* (2006.01)

(21) Application number: **10152101.1**

(22) Date of filing: **08.09.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.09.2004  US 939183**

(62) Document number(s) of the earlier application(s) in accordance with Art. 76 EPC:
**05796135.1 / 1 787 479**

(71) Applicant: **Qualcomm Incorporated**
**San Diego, CA 92121-1714 (US)**

(72) Inventor: **Molloy, Stephen**
**Carlsbad, CA 92008 (US)**

(74) Representative: **O'Neill, Aoife et al**
**Tomkins & Co.**
**5 Dartmouth Road**
**Dublin 6 (IE)**

Remarks:
This application was filed on 29 01 2010 as a divisional application to the application mentioned under INID code 62.

(54) **Caching method and apparatus for video motion compensation**

(57)    A method and apparatus for motion compensation using a cache memory coupled to the motion compensation circuitry. The motion compensation method takes advantage of the fact that significant spatial overlap typically exists between a plurality of blocks that make up a macroblock in a motion estimation algorithm. Accordingly, a region of pixels may be stored in the cache memory and the cache memory may be repeatedly accessed to perform interpolation techniques on spatially adjacent blocks of data without having to access main memory, the latter being extremely inefficient and wasteful of memory bandwidth.

FIG.6

EP 2 184 924 A2

**Description**

**BACKGROUND**

**Field**

The present invention relates to video technology, and more specifically to the use of cache techniques in video motion compensation.

**Background**

The integration of video functionality into mobile phones, personal digital assistants (PDAs) and other handheld devices has become mainstream in today's consumer electronic marketplace. This present capability to add imaging circuits to these handheld devices is attributable, in part, to the availability of advanced compression techniques such as MPEG-4 and H.264. Using H.264 or another appropriate compression scheme, video clips can be taken by the camera and transmitted wirelessly to other devices.

Video is generally one of the highest sources of memory bandwidth, particularly on application-heavy processing devices such as chipsets and digital signal processors implanted in mobile telephones, PDAs, and other handheld or compact devices. This high memory bandwidth requirement gives rise to challenges in memory bus design in general, and the configuration of a processor-to-memory scheme that optimizes the efficiency of memory fetches for video applications in particular.

An example of video bandwidth usage commonly occurs within the context of motion compensation. Motion compensation is a video decoding step wherein a block of pixels (picture elements) having a variable offset is fetched from memory and interpolated, using a multi-tap filter, to a fractional offset.

The block sizes fetched for a motion compensation read are generally small and of a width that may be poorly matched to the "power-of-two" bus widths that are commonly used in existing systems to interface data between processor and memory. Such power-of-two bus width interfaces in common usage may be $2^5$ widths (32 bits) and $2^6$ widths (64 bits). In light of the above, to fetch a block of data, only short burst lengths typically may be used as the processor must skip to reading a new address to fetch a new row of pixels associated with the block. These short burst lengths are known to be extremely inefficient for existing Synchronous Dynamic Random Access Memory (SDRAM), among other types of memories. As a result, the memory read of a block of pixels may be comparatively slow, and potentially unacceptable amounts of memory bandwidth may be consumed to perform image rendering functions.

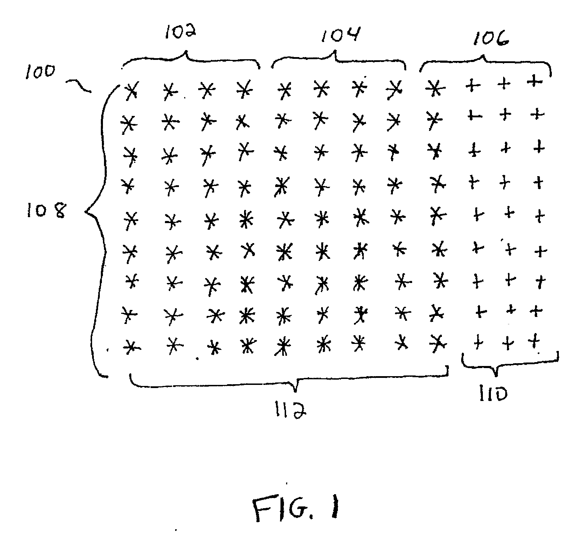

FIG. 1 shows an illustration of the inefficiencies associated with reading a block of data from memory in existing systems. Matrix 100 illustrates an arbitrary block of nine rows of twelve pixels each. For the purposes of this example, each pixel in a given row of pixels is stored as one byte (8 bit) of horizontally adjacent elements in memory. That is, twelve consecutive bytes in memory correspond to twelve horizontally adjacent pixels for display on a screen. In addition, this illustration assumes that a $2^5$ memory bus width (*i.e.*, 4 byte) is implemented in the hardware architecture of the system at issue, and an SDRAM-based memory system is employed.

Assume further that the decoding scheme at issue mandates at a given instance that the processor perform a motion compensation read of a 9 x 9 block of pixels. The 9 x 9 block is represented as the "*" symbols 112 in FIG. 1. Each * symbol constitutes 8 bits of data in this implementation. The group of "+" symbols 110 also constitutes 8-bit pixels in this example. However, the + pixels lie outside of the 9 x 9 block to be read. The nine rows 108 of * symbols 112 and + symbols 110 collectively represent a 12 x 9 rectangular region of pixels in memory.

Using the 32-bit bus, a motion compensation read of the illustrative 9 x 9 block of pixels actually requires the fetch of a 12 x 9 pixel block. Specifically, the memory controller in this example performs three fetches of 32 bits (4 bytes) each. During the first fetch, the bytes corresponding to the four pixels 102 in the first row are read. During the second fetch, the bytes corresponding to the four pixels 104 in the first row are read. During the third fetch, the bytes corresponding to the four pixels 106 in the first row are read. These reads are repeated for each of the nine rows. This 12 x 9 pixel block in this example is performed as nine separate bursts of three. Where a macroblock is equal to 16 blocks, each macroblock of the picture can require 144 bursts of three.

In short, the 32 bit bus architecture in this illustration requires that the pixels represented by the + symbols 110 be read, even though they are not part of the 9 x 9 block. Accordingly, the + pixels 110 represent wasted memory bandwidth. As large numbers of motion compensation reads of odd-sized blocks are fetched, the wasted bandwidth can become extremely significant, thereby degrading performance and contributing to extremely inefficient decoding of image data.

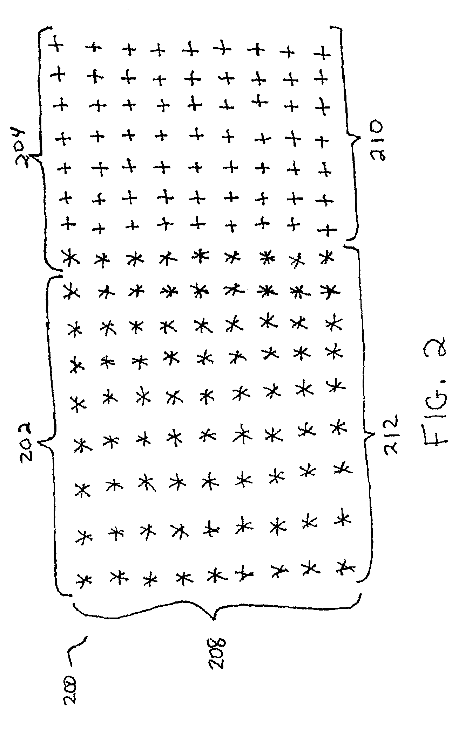

As a result of the increasing requirement for more memory bandwidth in various processor-based systems, a trend for increasing the width of the memory bus has increased dramatically in recent years. Unfortunately, for motion compensation applications associated with MPEG, and other compression schemes, the efficiency problem noted above may only be exacerbated with higher bus widths. Consider the example of FIG. 2, which employs a $2^6 = 64$ bit = 8 byte memory bus width. As before, a nine-by-nine block of pixels (208, 212) correspond to a block to be fetched from memory for use by the motion compensation circuitry. Because the bus in this illustration constitutes a 64-bit interface, the memory read requires that the read be performed as 9 bursts of two fetches 202 and 204 each. In the first fetch 202, eight bytes of pixel data 202 are read. In the second fetch, an additional eight bytes of pixel data are read. After 9 bursts of two fetches, a 16 x 9 block of pixels has been read in order to fetch the 9 x 9 block (202, 208). The pixels represented by the + symbol 210 represent the 45% of the data that is effectively wasted as a result of the fetch.

The problem in fetching macroblocks or sub-blocks that are not powers of 2 is made worse by the fact that in many systems, external memory accesses are slower than register accesses or accesses from a cache memory. While SDRAM and other types of memory technology have improved in speed and performance, these improvements have traditionally not been commensurate with the reads of unnecessary data associated with memory fetches of odd-size blocks for motion compensation.

Another problem relates to the high consumption of power associated with external memory reads. In the case of video decoding techniques, unnecessary data reads simply contributes to the inefficiencies of power consumption.

In general, in most compression schemes where macroblocks are used and further divided into sub-blocks, the collection of sub-blocks to be interpolated that comprise a macroblock tends to be spatially close, although offset by their individual motion vectors. For example, in the H.264 standard, the collection of 4 x 4 blocks that make up a macroblock are generally likely to be close. Accordingly, where a 12 x 9 pixel area is fetched, it is very likely that the 12 x 9 pixel areas for each block overlap, although the amount of overlap is not known a priori. In fact, using the H.264 standard as an example, for there to be no overlap in any of the 4 x 4 sub-blocks that make up a 16 x 16 macroblock, the 4 x 4 sub-blocks would have to be spread out over a 48 x 36 pixel area. It is statistically unlikely that the 4 x 4 sub-blocks of each macroblock could be simultaneously and consistently distributed in this manner. When performing motion interpolation, existing systems do not take advantage of this overlap. Instead, as in this illustration, separate fetches from main memory occur for each sub-block.

Accordingly, a need exists in the art to provide a faster and more efficient method of accessing data for use in motion compensation operations in video decoding.

## SUMMARY

In one aspect of the present invention, a method to decode image data using a motion compensation circuit coupled to a cache memory, the cache memory for storing pixel data to be input to the motion compensation circuit includes storing the pixel data in the cache memory including one or more blocks of pixels having a variable offset from reference blocks, retrieving the pixel data from the cache memory, inputting the pixel data into the motion compensation circuit, and interpolating the pixel data to a fractional offset of the one or more blocks of pixels.

In another aspect of the present invention, an apparatus to decode image data includes a control interface, a cache memory coupled to the control interface, the cache memory configured to hold image data comprising regions of pixels on a display, a memory bus interface coupled to the control interface, a motion compensation interpolation datapath coupled to the cache memory, and a motion compensation circuit coupled to the motion compensation interpolation datapath.

In yet another aspect of the present invention, an apparatus to decode image data, includes a control interface, a coordinate-to-cache address translator circuit coupled to the control interface, a cache memory coupled to the coordinate-to-cache address translator circuit, the memory cache configured to store blocks of pixel data, a motion compensation interpolation datapath coupled to the cache memory, a motion compensation circuit coupled to the motion interpolation datapath and configured to interpolate the blocks of pixel data received from the cache memory, a cache-to-physical address translator circuit coupled to the cache memory, and a memory bus interface coupled to the cache-to-physical address translation circuit.

In still another aspect of the present invention, an apparatus integrated in a mobile device to decode image data includes control interface means for receiving pixel data coordinates, coordinate address translation means for translating coordinate data to cache addresses, physical address translation means for translating cache addresses into physical addresses, a cache memory for storing regions of pixel data, a memory bus interface for issuing read commands to a main memory, and motion compensation means coupled to the cache memory for receiving regions of pixel data and interpolating blocks of pixels within the regions.

In yet another aspect of the present invention, computer-readable media embodying a program of instructions executable by a computer program to perform a method to decode image data using a motion compensation circuit coupled to a cache memory, the cache memory for storing pixel data to be input to the motion compensation circuit, includes storing the pixel data in the cache memory including one or more blocks of pixels having a variable offset from reference blocks, retrieving the pixel data from the cache memory, inputting the pixel data into the motion compensation circuit, and interpolating the pixel data to a fractional offset of the one or more blocks of pixels.

It is understood that other embodiments of the present invention will become readily apparent to those skilled in the art from the following detailed description, wherein it is shown and described only several embodiments of the invention by way of illustration. As will be realized, the invention is capable of other and different embodiments and its several details are capable of modification in various other respects, all without departing from the spirit and scope of the present invention. Accordingly, the drawings and detailed description are to be regarded as illustrative in nature and not as restrictive.

**BRIEF DESCRIPTION OF THE DRAWINGS**

Aspects of the present invention are illustrated by way of example, and not by way of limitation, in the accompanying drawings, wherein:

FIG. 1 is a diagram of a group of pixels being fetched as part of a motion compensation algorithm.

FIG. 2 is another diagram of a group of pixels being fetched as part of a motion compensation algorithm.

FIG. 3 is an illustration of various macroblock partitions used in the H.264 standard.

FIG. 4 is an illustration of various macroblock sub-partitions used in the H.264 standard.

FIGS. 5A - 5C represent an illustration of sub-pixel interpolation used in the H.264 standard.

FIG. 6 is a block diagram of a processing system in accordance with an embodiment of the present invention.

FIG. 7 is a flowchart showing a method for coupling a cache to motion compensation circuitry in accordance with an embodiment of the present invention.

FIG. 8 is a block diagram of the internal components of an exemplary decoding method using the caching apparatus in accordance with an embodiment of the present invention.

FIG. 9 shows a region of pixels describing the worst case distribution of sub-blocks in accordance with the guidelines of the H.264 standard.

**DETAILED DESCRIPTION**

The detailed description set forth below in connection with the appended drawings is intended as a description of various embodiments of the present invention and is not intended to represent the only embodiments in which the present invention may be practiced. Each embodiment described in this disclosure is provided merely as an example or illustration of the present invention, and should not necessarily be construed as preferred or advantageous over other embodiments. The detailed description includes specific details for the purpose of providing a thorough understanding of the present invention. However, it will be apparent to those skilled in the art that the present invention may be practiced without these specific details. In some instances, well-known structures and devices are shown in block diagram form in order to avoid obscuring the concepts of the present invention. Acronyms and other descriptive terminology may be used merely for convenience and clarity and are not intended to limit the scope of the invention.

H.264 is an ISO/IEC compression standard developed by the Joint Video Team (JVT) of ISO/IEC MPEG (Moving Picture Experts Group) and ITU-T VCEG. H.264 is a new video compression standard providing core technologies for the efficient storage, transmission and manipulation of video data in multimedia environments. H.264 is the result of an international effort involving hundreds of researchers and engineers worldwide. The focus of H.264 was to develop a standard that achieves, among other results, highly scalable and flexible algorithms and bitstream configurations for video coding, high error resilience and recovery over wireless channels, and highly network-independent accessibility. For example, with H.264-based coding it is possible to achieve good picture quality in some applications using less than a 32 kbit/s data rate.

MPEG-4 and H.264 builds on the success of predecessor technologies (MPEG-1 and MPEG-2), and provides a set of standardized elements to implement technologies such as digital television, interactive graphics applications, and interactive multimedia, among others. Due to its robustness, high quality, and low bit rate, MPEG-4 has been implemented in wireless phones, PDAs, digital cameras, internet web pages, and other applications. The wide range of tools for the MPEG-4 video standard allow the encoding, decoding, and representation of natural video, still images, and synthetic graphics objects. Undoubtedly, the implementation of future compression schemes providing even greater flexibility and more robust imaging is imminent.

MPEG-4 and H.264 include a motion estimation algorithm. Motion estimation algorithms use interpolation filters to calculate the motion between successive video frames and predict the information constituting the current frame using the calculated motion information from previously transmitted frames. In the MPEG coding scheme, blocks of pixels of a frame are correlated to areas of the previous frame, and only the differences between blocks and their correlated areas are encoded and stored. The translation vector between a block and the area that most closely matches it is called a motion vector.

The H.264 standard (also referred to as the MPEG-4 Part 10 "Advanced Video Coding" standard) includes support for a range of sub-block sizes (down to 4 x 4). These sub-blocks may include a range of partitions, including 4 x4, 8 x4, 4 x 8, and 8 x 8. Generally, a separate motion vector is required for each partition or sub-partition. The choice of which partition size to use for a given application may vary. In general, a larger partition size may be appropriate for homogenous areas of a picture, whereas a smaller partition size may be more suitable for detailed areas.

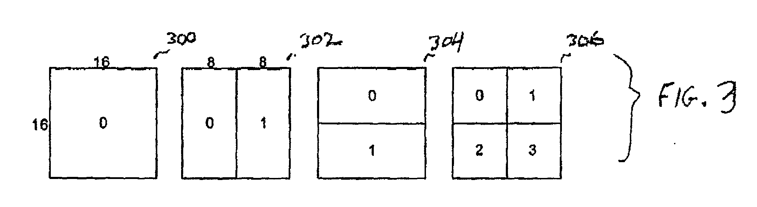

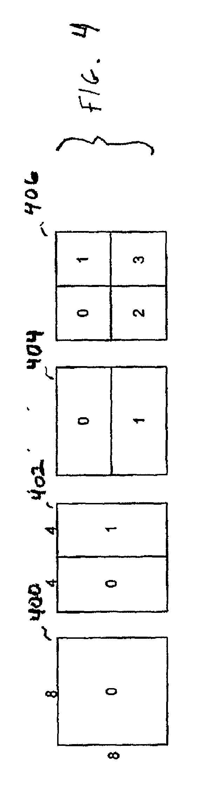

The H.264 standard (MPEG-4 Part 10, "Advanced Video Coding") supports motion compensation block sizes ranging from 16 x 16 to 4 x 4 luminance samples, with many options between the two. As shown in FIG. 3, the luminance component of each macroblock (16 x 16 samples) may be split up in four ways: 16 x 16 (macroblock 300), 16 x 8 (macroblock 302), 8 x 16 (macroblock 304), or 8 x 8 (macroblock 306). Where the 8 x 8 mode is chosen (macroblock 306), partitions within the macroblock may be split in a further four ways as shown in FIG. 4. Here, sub-blocks or sub-partitions may include an 8 x 8 sub-block 400, two 8 x 4 sub-blocks 402, two 4 x 8 sub-blocks 404, or four 4 x 4 sub-blocks 406.

A separate motion vector is required in H.264 for each macroblock or sub-block. The compressed bit-stream transmitted to the decoding device generally includes a coded motion vector for each sub-block as well as the choice of partitions. Choosing a larger sub-block (e.g., 16 x 16, 16 x 8, 8 x 16) generally requires a smaller number of bits to signal the choice of motion vector(s) and type of sub-block. However, the motion compensated residual in this instance may contain a significant amount of energy in frame areas with high detail. Conversely, choosing a small sub-block size (*e.g.*, 8 x 4, 4 x 4, *etc.*) generally requires a larger number of bits to signal the motion vector(s) and choice of sub-block (s), but may provide a lower-energy residual after motion compensation. Consequently, the choice of sub-block or partition size may have a significant impact on compression performance. As noted above, a larger sub-block size may be appropriate for homogeneous areas of the frame, and a smaller partition size may be beneficial for more detailed areas.

Sub-Pixel Motion Vectors

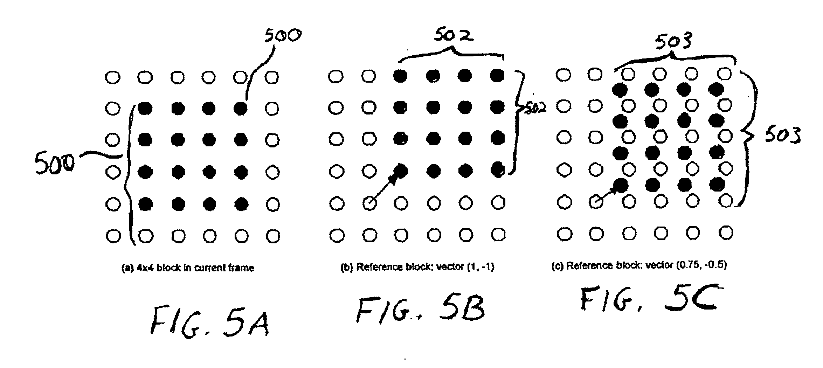

In the H.264 standard, each sub-block in an inter-coded macroblock is generally predicted from a corresponding area of the same size in a reference image. The motion vector defining the separation between the sub-block and a reference sub-block contains, for the luma component, 1/4-pixel resolution. Because samples at the sub-pixel positions do not exist in the reference image, they must be generated using interpolation from adjacent image samples. An example of sub-pixel interpolation is shown in FIG. 5. FIG. 5A shows an exemplary 4 x 4 pixel sub-block 500 in a reference image. The sub-block 500 in FIG. 5A is to be predicted from an adjacent area of the reference picture. If the horizontal and vertical components of the motion vector are integers (1, -1), such as that shown in the illustration of FIG. 5B, the applicable samples 502 in the reference block actually exist. However, if one or both vector components are fractional (non-integer) values (0.75, -0.5), the prediction samples forming sub block 503 are generated by interpolating between the adjacent pixel samples in the reference frame.

Sub-pixel motion compensation may provide substantially improved compression performance over integer-pixel compensation, at the expense of increased complexity. The finer the pixel accuracy, the better the picture. For example, quarter-pixel accuracy outperforms half-pixel accuracy.

In the luma component, the sub-pixel samples at half-pixel positions may be generated first and may be interpolated from neighboring integer-pixel samples using, in one configuration, a 6-tap Finite Impulse Response filter. In this configuration, each half-pixel sample represents a weighted sum of six neighboring integer samples. Once all of the half-pixel samples are available, each quarter-pixel sample may be produced using bilinear interpolation between neighboring half- or integer-pixel samples.

Motion Vector Prediction

Encoding a motion vector for each partition may take a significant number of bits, particularly if small sub-block sizes are chosen. Motion vectors for neighboring sub-blocks may be highly correlated and so each motion vector may be predicted from vectors of nearby, previously coded sub-blocks. A predicted vector, $MV_p$, may be formed based on previously calculated motion vectors. MVD, the difference between the current vector and the predicted vector, is encoded and transmitted. The method of forming the predicted vector $MV_p$ depends on the motion compensation sub-block size and on the availability of nearby vectors. The basic predictor in some implementations is the median of the motion vectors of the macroblock sub-blocks immediately above, diagonal above and to the right, and immediately left of the current block or sub-block. The predictor may be modified if (a) 16 x 8 or 8 x 16 sub-blocks are chosen and/or (b) if some of the neighboring partitions are not available as predictors. If the current macroblock is skipped (*i.e.*, not transmitted), a predicted vector may be generated as if the macroblock were coded in 16 x 16 partition mode.

At the decoder, the predicted motion vector $MV_p$ may be formed in the same way and added to the decoded vector difference MVD. In the case of a skipped macroblock, no decoded vector is present and so a motion-compensated macroblock may be produced according to the magnitude of $MV_p$.

According to one aspect of the present invention, motion compensation circuitry is coupled to an appropriately-sized cache memory to dramatically improve memory performance. The techniques as used herein can result in motion compensation bandwidth being reduced by as much as 70%, or greater depending on the implementation. In addition, the spread in bandwidth between the best case block size and the worst case block size may be reduced by 80% or greater. In one embodiment, all unaligned odd-length fetches become power-of-two word aligned cache line loads, increasing memory access efficiency.

The increased use of long interpolation filters (such as in H.264) over that of simple bilinear filtering, the presence of small block sizes (e.g., 4 x 4 sub-blocks for H.264) and word-oriented memory interfaces for motion compensation results in significant spatial overlap between sub-block fetches needed for rendering of a macroblock. In one aspect of the present invention, a small cache is coupled to the motion interpolation hardware. The cache line may be organized to hold a one or two dimensional area of a picture. In most configurations, the cache itself is organized to hold a two-dimensional area of pixels. Spatial locality between overlapping blocks can be exploited using the principles of the invention to allow many reads to come from the very fast cache rather than from the much slower external memory.

Through proper configuration of the cache as described below, the achieved per-pixel hit rate may be very high (in some instances, greater than 95%). When the hit rate is high, the memory bandwidth associated with the cache fills is low. Accordingly, the objective of reducing memory bandwidth is addressed. During simulations on real high-motion video test clips using the principles of the present invention, bandwidth has been shown to be reduced to as much as 70%.

Accordingly, for a properly configured cache that achieves a high hit rate, the majority of sub-blocks may be read directly from the cache. In this typical case, the average read bandwidth into the cache on a per macroblock basis is equivalent to the number of pixels in the macroblock itself. This configuration may decouple the sensitivity of the read bandwidth to the method by which the macroblock is broken down into sub-blocks. The stated advantage of reducing the bandwidth spread between the worst cast mode (e.g., all 4 x 4 sub-blocks) and the best case mode (e.g., a single 16 x 16 macroblock) may be realized. Simulations have shown that a greater than 80% reduction in the bandwidth spread on real video test clips may be achieved. Consequently, the designer may specify one memory bandwidth constraint that works for all block sizes used in the compression standard at issue.

As discussed in greater detail below, the cache itself may contain cache lines with word-alignment and power-of-two burst lengths. The cache lines may accordingly be aligned with long burst reads versus the unaligned, odd-length short bursts needed for many systems when a cache is not used. These cache fills make efficient use of DRAM.

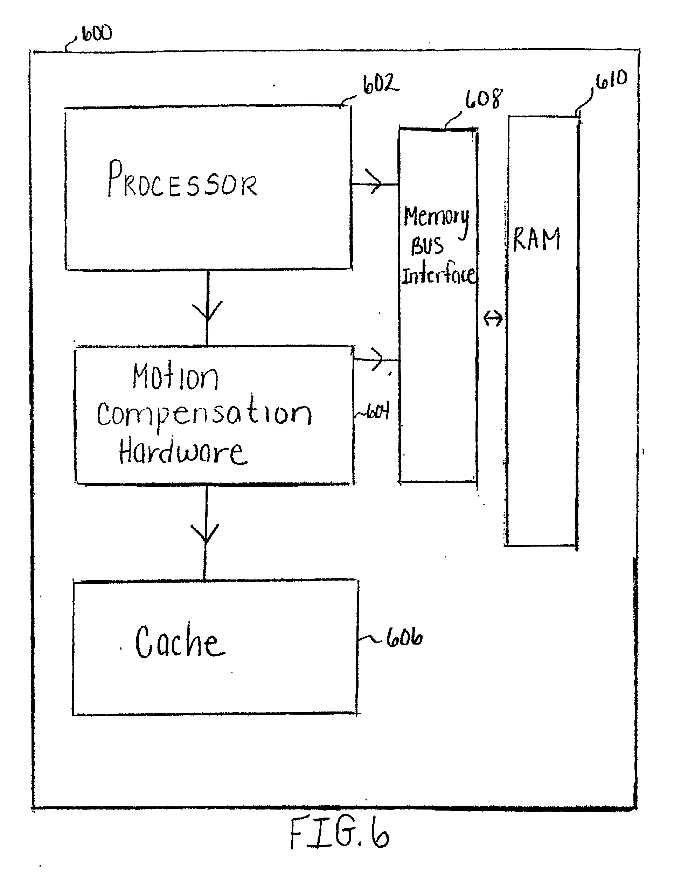

FIG. 6 is a block diagram of an exemplary processing system 600 in accordance with an embodiment of the present invention. The processing system 600 may constitute virtually any type of processing device that performs video playback and uses motion predicted compensation. One illustration of such a processing system 600 may be a chipset or printed circuit card in a handheld device such as an advanced mobile phone, PDA or the like that is used, among other purposes, to process video applications. The specific configuration of the various components may vary in position and quantity without departing from the scope of the present invention, and the implementation of FIG. 6 is designed to be illustrative in nature. A processor 602 may include a digital signal processor (DSP) for interpreting various commands and running dedicated code to perform functions such as receiving and transmitting mobile communications, or processing sound. In other embodiments, more than one DSP may be employed, or a general purpose processor or other type of CPU may be used. In this embodiment, the processor 602 is coupled to a memory bus interface 608 to enable the processor 602 to perform reads and writes to the main memory RAM 610 of the processing system 600. In addition, the processor 602 according to one embodiment is coupled to motion compensation circuitry 604, which may include one or a plurality of multi-tap filters for performing motion prediction. In addition, a dedicated cache 606 is coupled to the motion compensation hardware 604 for enabling ultra-fast transmission of necessary pixel data to the motion compensation unit 604 in accordance with the principles described herein. Note that, for clarity and ease of illustration, hardware blocks such as buffers, FIFOs, and general purpose caches which may be present in some implementations have been omitted from the figure.

In one example involving a processing system such as a mobile unit with video capabilities and a 32-bit memory interface, motion prediction based on the H.264 or similar MPEG standard is implemented. In this embodiment, for each 4 x 4 sub-block that is interpolated, a pixel area of 12 x 9 pixels is actually fetched. The 12 x 9 pixel area, however, generally does not include wasted pixels. This aspect of the invention takes advantage of the fact that the collection of 4 x 4 sub-blocks that collectively comprise a macroblock is likely to be spatially close, although offset by the sub-block's individual motion vectors. As such, it is very likely that the 12 x 9 pixel areas for each block overlap. The actual amount of overlap is not known a priori. However, for there to be no overlap in any of the 4 x 4 sub-blocks that constitute a 16 x 16 macroblock, the 4 x 4 blocks would have to be spread over a 48 x 36 pixel area. It is statistically unlikely that the 4 x 4 sub-blocks of each macroblock could be simultaneously and consistently distributed in this radical fashion. (These principles are discussed in greater detail below). In addition, a video encoder would likely never distribute the blocks in this manner because, in many embodiments, the number of bits that would have to be used for encoding all of the different motion vectors are encoded differentially. Consequently, where the sub-blocks are all different, a great deal of data would have to be spent coding the motion vectors.

According to this aspect of the present invention, a caching mechanism is used to exploit these areas of overlap to eliminate redundant fetching and needless reads from external memory. While presented in the context of the H.264 standard, the invention is equally applicable to any device that performs motion compensated prediction. The illustration of the H.264 standard is used herein because H.264 is being considered for broadcast television, next generation DVD, mobile applications, and other implementations, each application to which the concepts of the present invention are applicable.

In one embodiment, a memory cache is coupled to a video motion compensation hardware block, which may include one or more multi-tap filters for performing sub-pixel interpolation. The system in this embodiment may include a control interface, a coordinate-to-cache address translator, a cache-to-physical address translator, a cache memory, a memory bus interface, a memory receive buffer such as a FIFO buffer, and a motion compensation interpolation datapath, which datapath leads to the motion prediction circuitry.

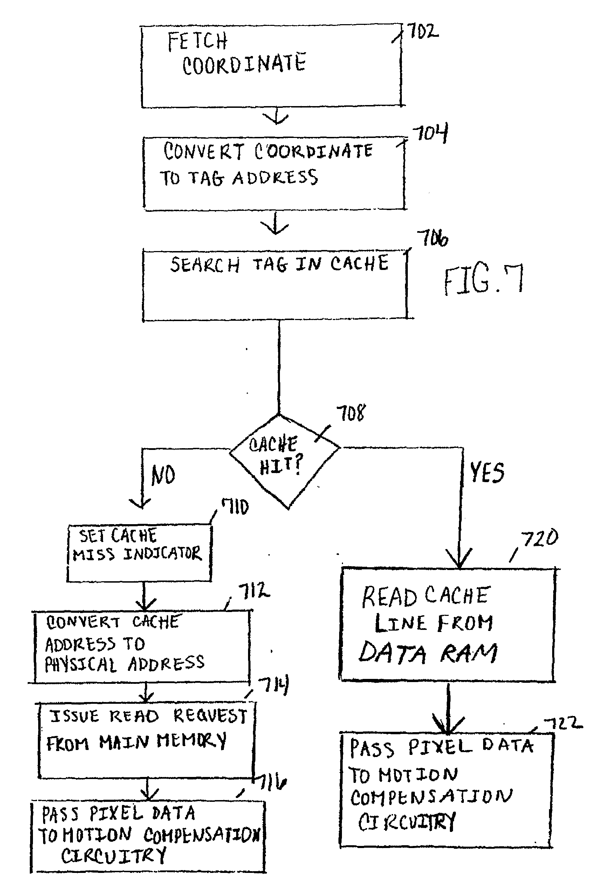

FIG. 7 is a flowchart showing a method for coupling a cache to motion compensation circuitry in accordance with an embodiment of the present invention. The flowchart describes the process of fetching coordinates associated with pixels on a screen to accomplish motion prediction. At step 702, a control interface receives a coordinate. The control interface may include various circuitry or hardware for receiving, buffering, and/or passing data from one area to another. In particular, the control interface may receive a frame buffer index (*i.e.*, information describing the location of the coordinates relative to the position in the frame buffer memory), a motion vector $MV_p$, a macroblock X and Y address; a sub-block X and Y address, and a block size. For convenience, this collection of parameters is referred to as a "coordinate" address in two-dimensional space. Depending on the specific compression scheme or codec used, the coordinate address may vary or include different or other parameters.

A coordinate-to-cache address translator may then convert the control interface information into an appropriate tag address and a cache line number (step 704). A number of methods for mapping addresses may be used as known in the art in this step. In one embodiment, a mapping is used that converts the coordinate address to X and Y coordinates, and concatenates the frame buffer index with sub-fields of the X and Y coordinates to form the tag address and the cache line number.

Thereupon, the tag address may be sent to one or more tag RAMs associated with a memory cache, as shown in step 706. Where the tag address represents a hit in any of the tag memories (decision branch 708), the data from the cache line is read from the data RAM (step 720). Pixel data may then be passed, via an appropriate data interpolation interface, to the motion compensation circuitry (step 722).

Where the tag address instead results in a cache miss (decision branch 708), a standard read request may be issued on the memory bus interface. In one embodiment, a flag representing a cache miss indicator is set (step 710). Then, a cache-to-physical address translator converts the cache address to a physical address associated with the main memory (step 712). The read request from main memory is then issued by the memory controller, as illustrated in step 714. The applicable pixel data is retrieved, and passed to the motion compensation circuitry (step 716). In addition, in the case of a cache miss, the cache may be updated by the data retrieved from RAM (step 723) in a manner further described below.

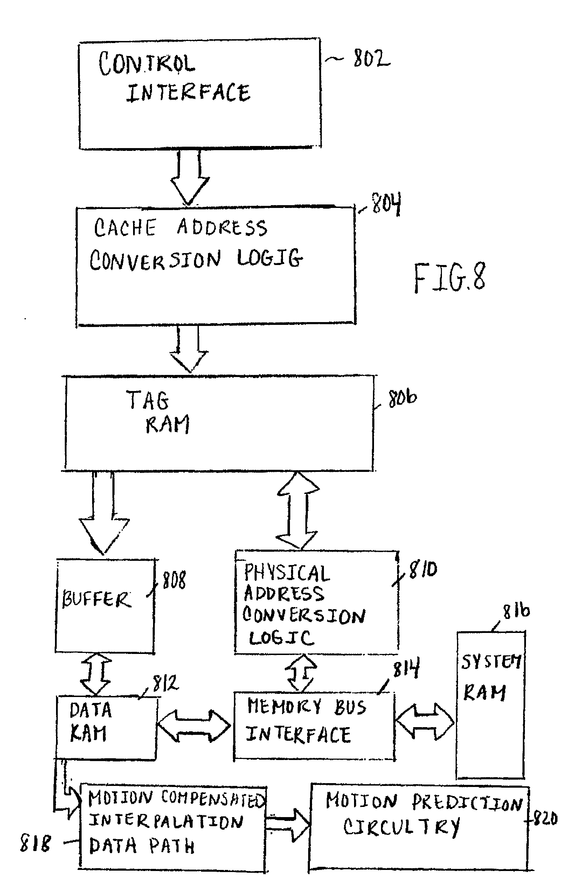

FIG. 8 is a block diagram of the internal components of an exemplary decoding method using the caching apparatus in accordance with an embodiment of the present invention. While FIG. 8 assumes the use of a direct-mapped cache, it is equally plausible in other embodiments to use other cache configurations, including set associative caches. Control interface circuitry 802 may be coupled to cache address conversion logic 804 for converting coordinates fetched from memory into a cache address. The cache conversion logic 804, in turn, may be coupled to a tag RAM 806 of a cache for storing tag addresses. The tag RAM 806 contains data representing the available addresses in the data RAM 812. The tag RAM 806 in this embodiment is coupled to an optional buffer 808, such as a conventional FIFO buffer. Buffer 808 in one configuration is used to hide latency so that multiple cache misses can be pending to the system RAM. A data RAM 812 stores the pixel data. Physical address conversion logic 810 is also present for converting the tag address and cache line number into a physical address in main memory for main memory reads. The physical address is passed to a memory bus interface 814, which performs a read in main memory 816 in the event of a cache miss. Additionally, the cache lines may be updated with the data that is read from the system RAM as a result of a cache miss. In certain configurations, to make room for the new entry, the cache may have to "evict" an existing entry. The specific heuristic that is used to choose the entry to evict is referred to as the "replacement policy." This step is shown generically as step 723 in FIG. 7, and is omitted from FIG. 8 for clarity. A variety of replacement policies are possible. Examples include the first-in-first out (FIFO) or least-recently used (LRU).

Ultimately, data either from the data RAM 812 associated with the cache or data from system RAM 816 is passed via motion compensated interpolation datapath 818 to the motion prediction circuitry 820. At least two read policies in the instance of a cache miss are possible. In one configuration, the missed read data is transmitted to the cache, and the required pixels are immediately forwarded to the motion compensation datapath 818. In another configuration, the missed read data is transmitted to the cache and written into the cache's data RAM 812. The pixel data is then read out of the data RAM 812 and passed to the motion compensation datapath, where randomly offset sub-pixel values are converted into fractional values.

The coupling of a memory cache to a video motion compensation hardware block as described herein allows the hardware block to quickly retrieve sub-blocks it needs for proper interpolation of the displacement of sub-blocks and the proper representation of motion. In one embodiment, YCbCr is used in lieu of RGB pixels. In still another embodiment, the motion compensation hardware comprises filters having a number of taps greater than that of the traditional bilinear filter used in existing video applications. The more taps that are used, the greater the likelihood that significant spatial overlap will exist between the retrieved sub-blocks.

In one embodiment, the cache's data memory is optimized to avoid fetches of needless data. Specifically, the cache memory sized to hold an integer number of image macroblocks. The data memory may contain N/L cache lines, where N represents the number of bytes in the cache and L represents the number of bytes in a single cache line. As an illustration, a cache may include a 64 x 32 window of pixels, where N = 2 Kbytes and L = 32 bytes. In most embodiments, L is chosen to be a multiple of the memory bus interfaces burst length. A cache line may contain a two-dimensional area of pixels. The data memory may receive an address from the data memory address generator. The output of the data memory may thereupon be transmitted to the interpolation circuitry. Typical sizes may vary depending on the application, but in some embodiments may be 1 KB or 2KB total made up of 32-byte cache lines. Cache lines may hold one or two dimensional areas such as 8 x 4 or 32 x 1, etc.

The interpolation circuit may contain horizontal and vertical filtering logic. In one embodiment as noted above, the filter used has greater than two filter taps. The output of the interpolation circuit represents the motion-compensated predictor. One exemplary filter is the six-tap filter currently implemented in H.264 standards. In these configurations where more than two filter taps are used (namely, where more than bilinear filtering is being performed), the present invention may demonstrate the greatest memory bandwidth savings in light of the reuse of sub-blocks with substantial spatial overlap and the appropriately-sized cache coupled to the interpolation circuit.

Overlap Between Sub-Blocks Due To Interpolation Filter Length

Here we demonstrate motion compensated interpolation in the context of the H.264 standard. Other motion compensation-based standards, as noted above, are equally suitable and the principles of the present invention may be equally applicable to these other standards. Motion compensated interpolation of 4 x 4 blocks using H.264's 6 tap filters requires a fetch of a 9 x 9 block. The 16 9 x 9 blocks that make up a macroblock can overlap, depending on the magnitude and direction of their individual motion vectors. The same is true of other subject shapes (e.g., 8 x 8, 8 x 4, etc.) In the worst case, if 4 x 4/8 x 4/4 x 8/8 x 8 sub-block motion vectors are displaced +/- M pixels from the best 16 x 16 motion vector, the area spanned by all the sub-blocks can cover at most $(16 + 5 + 2M)^2$ pixels.

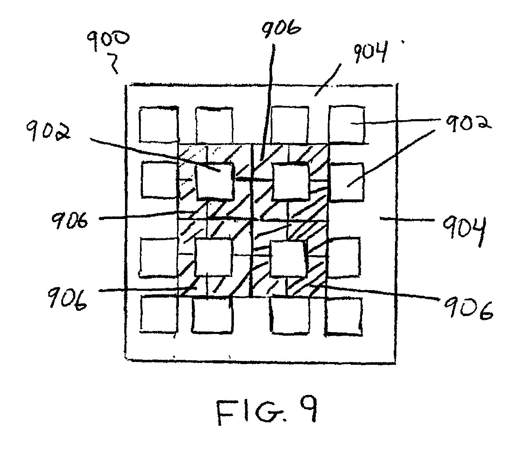

FIG. 9 shows a region of pixels describing the worst case distribution of sub-blocks in accordance with the guidelines of the exemplary H.264 standard. The sixteen squares 906 in the shaded region illustrate the position of the 16 4 x 4 blocks comprising a macroblock prior to displacement. The sixteen squares 902 illustrate the 4 x 4 blocks displaced in a manner where no overlap exists, spreading the 4 x 4 blocks out as much as possible so that there is no overlap in the memory fetches for each block. The remaining surrounding area 904 represents the area corresponding to the extra pixels that must be fetched in order to properly apply the interpolation filter to decode this macroblock. With M=4, this total pixel area measures 29 x 29 pixels.

If each sub-block is independently fetched, then the total number of pixels fetched per macroblock (referred to herein as P) is fixed, and independent of M. Exemplary values are summarized in the following table:

| Mode | Number of Sub-Blocks | Pixels Fetched Per Sub-Block | Pixels Fetched Per Macroblock (P) |
| --- | --- | --- | --- |
| 4 x 4 | 16 | 9 x 9 = 81 | 16 x 81 = 1296 |
| 8 x 4 | 8 | 13 x 9 = 117 | 8 x 117 = 936 |
| 4 x 8 | 8 | 9 x 13 = 117 | 8 x 117 = 936 |
| 8 x 8 | 4 | 13 x 13 = 169 | 4 x 169 = 676 |

Accordingly, given the previous example where M = 4, if the decoder fetches the 4 x 4 blocks individually, a total of 1296 pixels must be read even though the macroblock only covers an area of 29 x 29 = 841 pixels. In this event, the decoder would have to read approximately 50% more pixels than necessary, which results in a waste of valuable memory bandwidth.

Solving the condition where $(16 + 5 + 2M)^2 < P$ enables a designer to determine under what conditions sub-block overlap must occur, and how much such overlap actually exists. Solving this quadratic equation, it can be shown that overlap must occur under the following condition:

$$M < \frac{1}{8}\left(4\sqrt{P} - 84\right)$$

The maximum motion vector magnitude up to which overlap must exist is summarized in the table below:

| Mode | Number of Sub-Blocks | M |
|------|---------------------|---|
| 4 x 4 | 16 | 7 |
| 8 x 4 | 8 | 4 |
| 4 x 8 | 8 | 4 |
| 8 x 8 | 4 | 2 |

For example, in 4 x 4 mode, even if the individual motion vectors of the 4 x 4 sub-blocks differ by any amount up to +/- M pixels, the fetches <u>must</u> overlap. The fraction of redundant pixels that would be fetched if the overlap is not exploited is

$$1 - \left(\left((16 + 5 + 2M)^2\right)/P\right)$$

Overlap Between Sub-Blocks Due To Memory Bus Width

Next, an example is considered where the main memory bus is effectively 8 bytes (32 bit DDR). If a linear frame buffer format is used, all horizontal spans of pixels being fetched in one embodiment are a multiple of 8 pixels wide. In general, the wider the path to memory, the less efficient it becomes to fetch small blocks of pixels (that is, more wasted pixels per fetch). In the worst case if all sub-block motion vectors are displaced +/- M pixels from the best 16 x 16 motion vector, the total area spanned by the sub-blocks grows to (16 + 5 + 2M) x (28 + 2M). If each sub-block is independently fetched in this scenario, the total number of pixels fetched per macroblock (called P) increases as shown below.

| Mode | Number of Sub-Blocks | Pixels Fetched Per Sub-Block | Pixels Fetched Per Macroblock (P) |
|------|---------------------|------------------------------|-----------------------------------|
| 4 x 4 | 16 | 16x9=144 | 16x144=2304 |
| 8 x 4 | 8 | ((0.25x16)+ (0.75 x 24)) x 9 = 198 | 8 x 198 = 1584 |
| 4 x 8 | 8 | 16 x 13 = 208 | 8x208=1664 |
| 8 x 8 | 4 | ((0.25 x 16) + (0.75 x 24)) x 13 = 286 | 4x286=1144 |

Solving for the condition where (16 + 5 + 2M) x (28 + 2M) < P enables the designer to determine under what conditions sub-block overlap must occur, and how much overlap exists. It can be shown that overlap must occur whenever

$$M < \frac{1}{8}\left(\sqrt{16P + 196} - 98\right)$$

The maximum motion vector magnitude up to which overlap must exist is summarized in the table below.

| Mode | Number of Sub-Blocks | M |
|------|---------------------|---|
| 4 x 4 | 16 | 11 |
| 8 x 4 | 8 | 7 |

(continued)

| Mode | Number of Sub-Blocks | M |
|---|---|---|
| 4 x 8 | 8 | 8 |
| 8 x 8 | 4 | 4 |

It should be noted in this embodiment that, due to a wider memory interface, more overlap between fetches is likely to be present. Further, the fraction of redundant pixels that would be fetched if the overlap is not exploited is simply 1 - ((16 + 5 + 2M) x (28 + 2M)/P).

Overlap Between Spatially-Adjacent Macroblocks

As noted above, given the filter interpolation length in the configuration using the exemplary H.264 standard and given the illustration of the wide memory bus interface, the region of pixels fetched for each macroblock is (16 + 5 +2M) x (28 + 2M). The variance of M from zero up to eight represents a rectangular window of pixels varying from 28 x 21 to 44 x 37.

In a VGA sized picture according to one configuration, 1200 16 x 16 macroblocks cover an area of 640 x 480 = 307,200 pixels. If each macroblock requires a minimum-sized fetch of 28 x 21 pixels, then a total of 1200 x 28 x 21 = 705,600 pixels are fetched per picture. Because the picture only contains 307,200 unique pixels, it is impossible for macroblock fetches to all be nonoverlapping. In fact, it can be determined that a little over half of the pixels being fetched are redundant and will be fetched twice (705,600 - 307,200 = 398,400 redundant pixel fetches per frame).

Exploiting The Overlap

Accordingly, fetches of sub-blocks within a macroblock may be overlapping up to some maximum delta value between the sub-block's motion vectors. In addition, overlap must exist in this configuration between fetches of spatially adjacent macroblock. This overlap is predominantly due to (1) the use of interpolation filters, (2) the wider memory bus width characteristic of many systems, and (3) overlap with neighboring macroblocks.

A cache is consequently a useful mechanism to use in connection with motion interpolation logic whenever a standard is used that causes locality in memory to exist, even though it is unclear precisely where that locality exists (namely, until a motion vector is decoded it cannot be determined where the fetch is relative to any previous fetches that may have been performed). It can be reasonably assumed, however, that for a system to exploit the overlap due to overlapping sub-blocks, an appropriate cache size is approximately equal to the size of the expected spatial extent of a macroblock - such as, for example (16 + 5 + 2M) x (28 + 2M) luma pixels. Varying M from zero to a maximum of eight means that appropriate cache sizes may range from 512 bytes to 2 Kbytes.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

According to an aspect of the present invention, there is provided a method to decode image data using a motion compensation circuit coupled to a cache memory, the cache memory for storing pixel data to be input to the motion compensation circuit, the method comprising:

storing the pixel data in the cache memory comprising one or more blocks of pixels having a variable offset from reference blocks;
retrieving the pixel data from the cache memory; inputting the pixel data into the motion compensation circuit; and interpolating the pixel data to a fractional offset of the one or more blocks of pixels.

A YCbCr pixel format may be used.
The motion compensation circuit may comprise a multi-tap interpolation filter.
The multi-tap interpolation filter may comprise three or more taps.
The multi-tap interpolation filter may comprise four taps.
The multi-tap interpolation filter may comprise six taps.
The multi-tap interpolation filter may comprise horizontal and vertical filtering logic.
The method may further comprise a memory bus coupled to the cache memory, wherein the cache memory may further comprise a plurality of cache lines ofL bytes each, wherein L comprises an integer multiple of the memory bus width.

The cache memory may be configured to store an integer number of the one or more blocks of pixels.

The one or more blocks may comprise an image macroblock.

The cache memory may comprise a plurality of cache lines, each cache line comprising a one- dimensional area of pixel data.

The cache memory may comprise a plurality of cache lines, each cache line comprising a two-dimensional area of pixel data.

The cache memory and the motion compensation unit may be integrated into a mobile device.

The mobile device may comprise a mobile handset.

According to an aspect of the invention, there is provided an apparatus to decode image data comprising:

a control interface;
a cache memory coupled to the control interface, the cache memory configured to hold image data comprising regions of pixels on a display;
a memory bus interface coupled to the control interface; a motion compensation interpolation datapath coupled to the cache memory; and
a motion compensation circuit coupled to the motion compensation interpolation datapath.

The cache memory may be configured to hold an integer number of image macroblocks.

The cache memory may comprise N/L cache lines, wherein N comprises the number of bytes in the cache, L comprises the number of bytes in a cache line, and L comprises a multiple of the memory bus interface width.

A YCbCr pixel format may be used.

The motion compensation circuit may comprise a multi-tap interpolation filter.

The multi-tap interpolation filter may comprise three or more taps.

The multi-tap interpolation filter may comprise four taps.

The multi-tap interpolation filter may comprise six taps.

The multi-tap interpolation filter may comprise horizontal and vertical filtering logic.

The apparatus may further comprise coordinate-to-cache translation logic coupled to the control interface.

The apparatus may further comprise cache-to-physical address translation logic coupled to the memory interface.

The apparatus may further comprise a buffer coupled to the memory bus interface and to the motion compensation interpolation datapath.

According to an aspect of the invention, there is provided an apparatus to decode image data, comprising:

a control interface;
a coordinate-to-cache address translator circuit coupled to the control interface;
a cache memory coupled to the coordinate-to-cache address translator circuit, the memory cache configured to store blocks of pixel data;
a motion compensation interpolation datapath coupled to the cache memory;
a motion compensation circuit coupled to the motion interpolation datapath and configured to interpolate the blocks of pixel data received from the cache memory;
a cache-to- physical address translator circuit coupled to the cache memory; and
a memory bus interface coupled to the cache-to-physical address translation circuit.

The cache memory may be configured to store an integer number of image macroblocks.

The cache memory may comprise N/L cache lines, wherein N comprises the number of bytes in the cache, L comprises the number of bytes in a cache line, and L comprises a multiple of the memory bus interface width.

A YCbCr pixel format may be used.

The motion compensation circuit may comprise a multi-tap interpolation filter.

The multi-tap interpolation filter may comprise three or more taps.

The multi-tap interpolation filter may comprise four taps.

The multi-tap interpolation filter may comprise six taps.

The multi-tap interpolation filter may comprise horizontal and vertical filtering logic.

Each coordinate in the coordinate-to-cache translation circuit may comprise a frame buffer index, a motion vector, a macroblock address, and a block size.

The motion compensation circuit may be configured to interpolate pixel regions in a format defined by an H. 264 standard.

The motion compensation circuit may be configured to interpolate pixel regions in a format defined by an MPEG standard.

According to an aspect of the present invention, there is provided an apparatus integrated in a mobile device to decode image data comprising:

control interface means for receiving pixel data coordinates;
coordinate address translation means for translating coordinate data to cache addresses;
physical address translation means for translating cache addresses into physical addresses;
a cache memory for storing regions of pixel data;
a memory bus interface for issuing read commands to a main memory; and
motion compensation means coupled to the cache memory for receiving regions of pixel data and interpolating blocks of pixels within the regions.

The motion compensation means may be further configured to interpolate blocks of pixels that correspond to an H.264 standard.

The motion compensation means may comprise a multi-tap interpolation filter.

The motion compensation means may comprise a four-tap interpolation filter.

The multi-tap interpolation filter may comprise four taps.

The pixel data coordinates may each comprise a frame buffer index, a motion vector, a macroblock address, and a block size.

According to an aspect of the present invention, there is provided computer-readable media embodying a program of instructions executable by a computer program to perform a method to decode image data using a motion compensation circuit coupled to a cache memory, the cache memory for storing pixel data to be input to the motion compensation circuit, the method comprising:

storing the pixel data in the cache memory comprising one or more blocks of pixels having a variable offset from reference blocks;
retrieving the pixel data from the cache memory;
inputting the pixel data into the motion compensation circuit; and
interpolating the pixel data to a fractional offset of the one or more blocks of pixels.

The program of instructions may be configured to decode image data based on an H.264 standard.

## Claims

1.   A method to decode image data using a motion compensation circuit coupled to a cache memory, the cache memory for storing pixel data to be input to the motion compensation circuit, the method comprising:

storing the pixel data in the cache memory comprising one or more blocks of pixels having a variable offset from reference blocks;
retrieving the pixel data from the cache memory;
inputting the pixel data into the motion compensation circuit; and
interpolating the pixel data to a fractional offset of the one or more blocks of pixels;

characterised by a memory bus coupled to the cache memory, wherein the cache memory further comprises a plurality of cache lines of L bytes each, wherein L comprises an integer multiple of the memory bus width.

2.   The method of claim 1 wherein the cache memory is configured to store an integer number of the one or more blocks of pixels.

3.   The method of claim 1 wherein the one or more blocks comprise an image macroblock.

4.   The method of claim 1 wherein the cache memory comprises a plurality of cache lines, each cache line comprising a one- or two-dimensional area of pixel data.

5.   An apparatus integrated in a mobile device to decode image data comprising:

control interface means for receiving pixel data coordinates;
coordinate address translation means for translating coordinate data to cache addresses;
physical address translation means for translating cache addresses into physical addresses;
a cache memory for storing regions of pixel data;
a memory bus interface for issuing read commands to a main memory; and
motion compensation means coupled to the cache memory for receiving regions of pixel data and interpolating blocks of pixels within the regions.

6. The apparatus of claim 5 wherein the motion compensation means is further configured to interpolate blocks of pixels that correspond to an H.264 standard..

7. The apparatus of claim 5 wherein the pixel data coordinates each comprise a frame buffer index, a motion vector, a macroblock address, and a block size.

8. An apparatus to decode image data, comprising:

a control interface;
a coordinate-to-cache address translator circuit coupled to the control interface;
a cache memory coupled to the coordinate-to-cache address translator circuit, the memory cache configured to store blocks of pixel data;
a motion compensation interpolation datapath coupled to the cache memory;
a motion compensation circuit coupled to the motion interpolation datapath and configured to interpolate the blocks of pixel data received from the cache memory;
a cache-to- physical address translator circuit coupled to the cache memory; and
a memory bus interface coupled to the cache-to-physical address translation circuit.

9. The apparatus of claim 8 wherein the cache memory is configured to store an integer number of image macroblocks.

10. The apparatus of claim 8 wherein the cache memory comprises N/L cache lines, wherein N comprises the number of bytes in the cache, L comprises the number of bytes in a cache line, and L comprises a multiple of the memory bus interface width.

11. The apparatus of claim 8 wherein each coordinate in the coordinate-to-cache translation circuit comprises a frame buffer index, a motion vector, a macroblock address, and a block size.

12. An apparatus to decode image data comprising:

a control interface;
a cache memory coupled to the control interface, the cache memory configured to hold image data comprising regions of pixels on a display;
a memory bus interface coupled to the control interface; a motion compensation interpolation datapath coupled to the cache memory; and
a motion compensation circuit coupled to the motion compensation interpolation datapath.

13. The apparatus of claim 12 wherein the cache memory is configured to hold an integer number of image macroblocks.

14. The apparatus of claim 12 wherein the cache memory comprises N/L cache lines, wherein N comprises the number of bytes in the cache, L comprises the number of bytes in a cache line, and L comprises a multiple of the memory bus interface width.

15. The apparatus of claim 12 further comprising coordinate-to-cache translation logic coupled to the control interface., and optionally, cache-to- physical address translation logic coupled to the memory interface.

EP 2 184 924 A2

FIG. 1

FIG. 2

EP 2 184 924 A2

FIG. 3

FIG. 4

500

502

503

500

502

503

(a) 4x4 block in current frame

(b) Reference block: vector (1, -1)

(c) Reference block: vector (0.75, -0.5)

FIG. 5A

FIG. 5B

FIG. 5C

FIG.6

FETCH COORDINATE 702

CONVERT COORDINATE TO TAG ADDRESS 704

SEARCH TAG IN CACHE 706

FIG.7

CACHE HIT? 708

NO

SET CACHE MISS INDICATOR 710

CONVERT CACHE ADDRESS TO PHYSICAL ADDRESS 712

ISSUE READ REQUEST FROM MAIN MEMORY 714

PASS PIXEL DATA TO MOTION COMPENSATION CIRCUITRY 716

YES

READ CACHE LINE FROM DATA RAM 720

PASS PIXEL DATA TO MOTION COMPENSATION CIRCUITRY 722

FIG.8

FIG. 9